# EUROPEAN PATENT APPLICATION

(11) **EP 1 615 367 A1**
(43) Date of publication of application: **11.01.2006**
(21) Application number: 05015034.1
(22) Date of filing: 11.07.2005
(51) Int. Cl.: H04L 5/02, H04L 27/26

(54) **Method of allocating subcarriers on the downlink of a CDMA system**

(30) Priority: 10.07.2004 KR 2004053813
(71) Applicant: Samsung Electronics Co., Ltd., Suwon-si, Gyeonggi-Do (KR)
(72) Inventor: Kim, Seong-Lyun, Yeongtong-gu Suwon-si Gyeonggi-do (KR); Yun, Sang-Boh, Yeongtong-gu Suwon-si Gyeonggi-do (KR); Lee, Yeon-Woo, Yeongtong-gu Suwon-si Gyeonggi-do (KR); Park, Won-Hyoung, Yeongtong-gu Suwon-si Gyeonggi-do (KR)
(74) Representative: Grünecker, Kinkeldey, Stockmair & Schwanhäusser Anwaltssozietät

(57) **Abstract**

In a resource allocation method in a multicarrier-based mobile communication system that includes base stations and supports multiple access of a plurality of terminals identified using codes, the service area of each base station is divided into at least two virtual cells having different radii about the base station, and resources are actively allocated to terminals located in the service area according to distribution of the terminals in the virtual cells. The service area is divided into two virtual cells based on received signal strengths of the terminals for a specific subchannel, and the specific subchannel is allocated to one terminal or at most two terminals according to distribution of the terminals in the virtual cells.

## Description

The present invention relates to a wireless communication system, and more particularly to a resource allocation method for downlink transmission in a multicarrier-based Code Division Multiple Access (CDMA) communication system.

Demand for high-speed data transmission and multiple access techniques is on the rise along with the increased use of personal mobile communications, creating a surge in the development of industries based on mobile communications. To meet this demand, a new hybrid technology for combining wireless digital modulation multiple access has been recently proposed.

A Direct Sequence-Spread Spectrum (DS-SS) CDMA system, which is a user multiplexing technique for efficiently sharing wireless communication channels, is known to have resistance to frequency selectivity of channels. The capacity of the DS-SS CDMA system is limited by Multiple Access Interference (MAI), resulting from incomplete auto-correlation and cross-correlation characteristics of spreading codes.

In flat fading channels, MAI can be removed using orthogonal codes having no cross-correlation. However, in frequency-selective fading channels, the orthogonality cannot be guaranteed due to inter-chip interference, which causes MAI and degrades system performance.

Orthogonal-Frequency-Division-Multiplexing-Code-Division-Multiple-Access (OFDM-CDMA) has been proposed to suppress the inter-chip interference in frequency-selective fading channels, which combines CDMA with OFDM creating a multicarrier modulation scheme.

In the OFDM system, multiple carriers are allocated to transmit data, so that the overall transmission rate is high and each carrier transmission rate is low. Even though the transmission rate is low in each carrier, the OFDM system can perform smooth transmission, enabling high-speed communications in multi-path channel environments.

The OFDM system generally transmits information of one user through one subchannel at a specific time. Technologies such as Multicarrier Direct-Sequence CDMA (MC DS-CDMA) and Variable Spreading Factor-Orthogonal Frequency Code Division Multiplexing (VSF-OFCDM) have been proposed to increase the efficiency of each subchannel in the OFDM system. Although these technologies have advantages of the physical layer by applying CDMA in channels, they provide no detailed and effective implementation method for management of wireless resources.

Thus, there is a need to provide a detailed and effective resource allocation method for achieving efficient resource management in the OFDM-CDMA system.

The present invention has been made in view of the above problem, and it is therefore the object of the invention to provide a resource allocation method for downlink transmission in a multicarrier-based wireless communication system, which increases system capacity by allocating the same subchannel to one or more terminals according to channel environments in downlink transmission, and a corresponding communication system.

This object is solved by the subject matter of the independent claims.

Preferred embodiments are defined in the dependent claims.

It is an aspect of the present invention to provide a resource allocation method for downlink transmission in a multicarrier-based wireless communication system, which efficiently manages wireless resources by dividing the service area of a base station into two virtual cells having different radii as a function of base station signal strength, and allocating the same subchannel to one or more terminals according to the locations of the terminals.

In accordance with one embodiment of the present invention, there is provided a resource allocation method in a communication system supporting multiple access of a plurality of terminals identified using spreading codes, the method including collecting, from terminals located in a service area of a base station, information of respective received signal strengths of the terminals for channels; determining whether a terminal having a received signal strength higher than a predetermined threshold for a specific subchannel is present; and allocating the specific subchannel to at least one terminal or at least two terminals according to the determination.

Preferably, if a terminal having a received signal strength higher than the predetermined threshold for the specific subchannel is not present, the specific subchannel is allocated to a terminal having a highest received signal strength, among the terminals located in the service area of the base station.

Preferably, if a terminal having a received signal strength higher than the predetermined threshold for the specific subchannel is present, it is determined whether or not the number of terminals having a received signal strength higher than the predetermined threshold for the specific subchannel is greater than 1. If the number of terminals having a received signal strength higher than the predetermined threshold for the specific subchannel is 1, the specific subchannel is allocated to the terminal having the received signal strength higher than the predetermined threshold for the specific subchannel. If the number of terminals having a received signal strength higher than the predetermined threshold for the specific subchannel is greater than 1, the specific subchannel is allocated to a terminal having a highest received signal strength and a terminal having a second highest received signal strength, among the terminals having a received signal strength higher than the predetermined threshold.

Preferably, if two or more terminals having a received signal strength higher than the predetermined threshold for the specific subchannel are present, the specific subchannel with maximum power is allocated to the terminal having the highest received signal strength, and the specific subchannel is allocated to the terminal having the second highest received signal strength, while gradually decreasing the maximum power allocated to the terminal having the highest received signal strength.

In accordance with another embodiment of the present invention, there is provided a resource allocation method in a multicarrier-based mobile communication system including base stations and supporting multiple access of a plurality of terminals identified using codes, the method including dividing a service area of each base station into at least two virtual cells having different radii about a base station; and actively allocating resources to terminals located in the service area of the base station according to distribution of the terminals in the virtual cells.

Preferably, the radii of the virtual cells are determined based on received signal strength of the terminals for a specific subchannel.

Preferably, the radius of a first one of the virtual cells is determined based on maximum transmission power of a specific subchannel, and the radius of a second one of the virtual cells is previously determined based on a threshold transmission power lower than the maximum transmission power.

Preferably, the distribution of the terminals is determined based on received signal strength of the terminals for the specific subchannel, the received signal strength being fed back from the terminals.

Preferably, if the terminals are all distributed in the first virtual cell, the specific subchannel is allocated to a terminal having a highest received signal strength among the terminals in the first virtual cell.

Preferably, if the terminals are distributed in both the first and second virtual cells, the specific subchannel is allocated to a terminal present in the second virtual cell.

Preferably, if the terminals are distributed in both the first and second virtual cells and one terminal is present in the second virtual cell, the specific subchannel is allocated to the terminal present in the second virtual cell.

Preferably, if the terminals are distributed in both the first and second virtual cells and two or more terminals are present in the second virtual cell, the specific subchannel is allocated to a terminal having a highest received signal strength and a terminal having a second highest received signal strength for the specific subchannel, among the two or more terminals present in the second virtual cell.

Preferably, if two or more terminals are present in the second virtual cell, the specific subchannel with maximum power is allocated to the terminal having the highest received signal strength, and the specific subchannel is allocated to the terminal having the second highest received signal strength, while gradually decreasing the maximum power allocated to the terminal having the highest received signal strength and gradually increasing power for the terminal having the second highest received signal strength.

The above and other objects, features and other advantages of the present invention will be more clearly understood from the following detailed description taken in conjunction with the accompanying drawings, in which:
Fig. 1 is a block diagram illustrating an Orthogonal Frequency Division Multiplexing-Code Division Multiple Access (OFDM-CDMA) system, to which a resource allocation method according to a preferred embodiment of the present invention is applied;
Fig. 2 is a conceptual diagram illustrating a method for dividing the service area of a base station into virtual cells in a resource allocation method according to a preferred embodiment of the present invention;
Fig. 3 is a flow chart illustrating a resource allocation method according to a preferred embodiment of the present invention; and
Fig. 4 is a graph illustrating performance simulation results of the resource allocation method according to the present invention.

Now, preferred embodiments of the present invention will be described in detail with reference to the accompanying drawings.

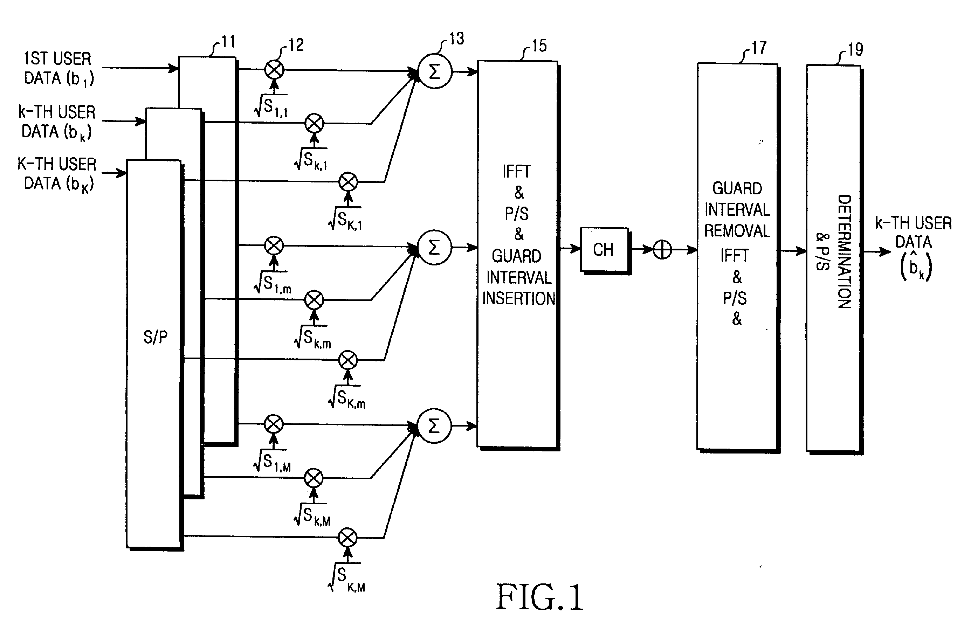

Fig. 1 is a block diagram showing an Orthogonal Frequency Division Multiplexing-Code Division Multiple Access (OFDM-CDMA) system, to which a resource allocation method according to a preferred embodiment of the present invention is applied.

As shown in Fig. 1, the OFDM-CDMA system includes a transmitter including Serial/Parallel (S/P) converters 11, spreaders 12, adders 13, an OFDM modulation unit 15, and a receiver including an OFDM demodulation unit 17 and a parallel/serial converter 19. Each of the S/P converters 11 serial/parallel converts input information of each user. Each of the spreaders 12 multiplies each of the S/P converted signals output from the S/P converters 11 by a spreading code of a corresponding user. Each of the adders 13 adds spread signals of different users output from the spreaders 12. The OFDM modulation unit 15 performs an Inverse Fast Fourier Transform (IFFT) on signals output from the adders 13, Parallel/Serial (P/S) converts the signals, and inserts guard intervals into the parallel/serial converted signals to transmit the signals through channels. In the receiver, the OFDM demodulation unit 17 receives the signals transmitted from the transmitter, removes guard intervals from the received signals, and S/P converts the resulting signals, and then performs a Fast Fourier Transform (FFT) on the converted signal. The P/S converter 19 converts parallel signals output from the OFDM demodulation unit 17 on a user-by-user basis, and outputs the converted signals.

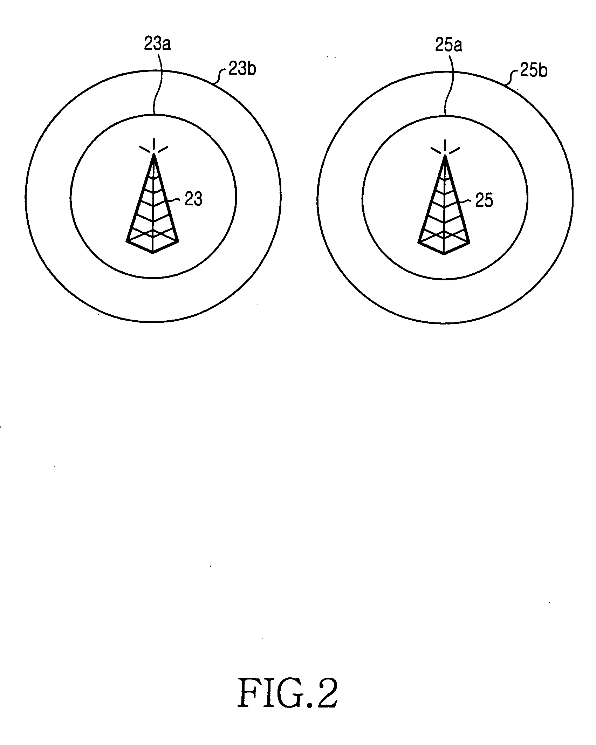

Fig. 2 is a conceptual diagram illustrating a method for dividing the service area of a base station into virtual cells having different radii about the base station in a resource allocation method according to a preferred embodiment of the present invention.

As shown in Fig. 2, for each of the base stations 23 and 25, two virtual cells are defined based on a Signal to Interference Ratio (SIR), taking account into the signal strength of a subchannel which a terminal receives from the corresponding base station and interference signal strength in the same subchannel of a neighboring cell. Specifically, the service area of the first base station 23 is divided into a first cell 23a, which is located near the base station 23 and has a high signal strength, and a second cell 23b which is located distant from the base station 23 and has a relatively low signal strength. The service area of the second base station 25 is divided into first and second cells 25a and 25b in the same manner.

In this cell environment, terminals located in the first cells 23a and 25a can transmit data at a higher rate than terminals located in the second cells 23b and 25b.

Terminals located in each cell transmit virtual cell location information to the base station, and the base station allocates resources to the terminals using the cell location information received from the terminals.

A detailed description will now be given of a method for allocating resources for downlink data transmission in the cell environment configured as described above.

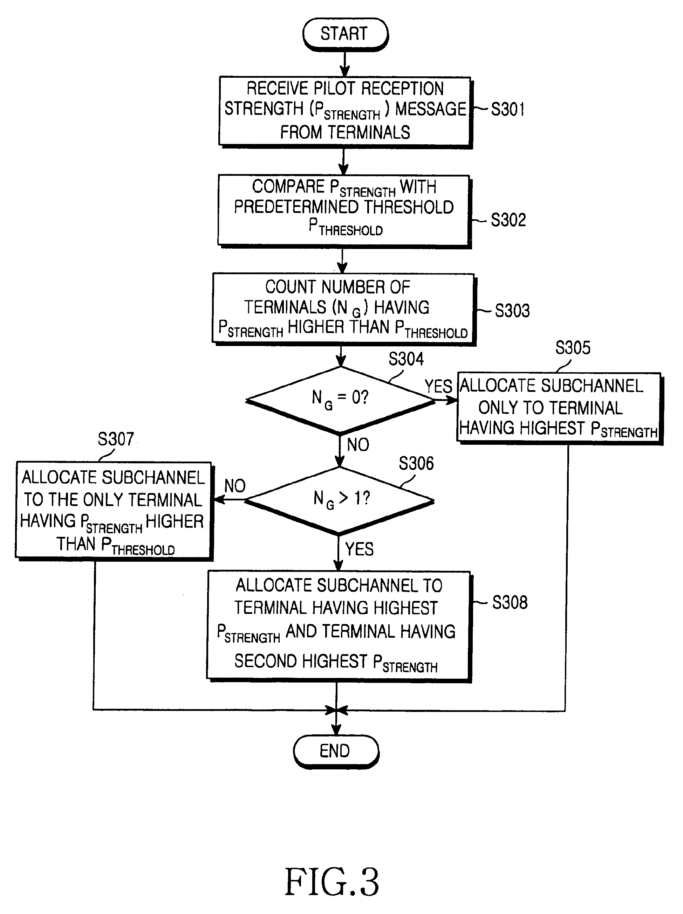

Fig. 3 is a flow chart illustrating the resource allocation method according to a preferred embodiment of the present invention.

First, each terminal receives pilot symbols of all subcarriers transmitted from the base station, measures an SIR of each of the subcarriers, and reports the received signal strength of each subcarrier to the base station through a feedback message in the uplink.

In Fig. 3, at step S301, the base station receives the feedback message from each terminal, compares a received signal strength (P_{strength}) of a specific subchannel, the information of which is included in the feedback message, with a predetermined threshold (P_{threshold}) at step S302, and counts the number of terminals (N_{G}) that have a received signal strength (P_{strength}) higher than the predetermined threshold (P_{threshold}) at step S303.

At step 304, the base station then determines whether or not the number of terminals (N_{G}) is zero. That is, at step 304, the base station determines whether or not there is a terminal having a received signal strength (P_{strength}) in the specific subchannel higher than the predetermined threshold (P_{threshold}). If there is no terminal having a received signal strength (P_{strength}) in the specific subchannel higher than the predetermined threshold (P_{threshold}), i.e., if the received signal strength of all terminals for the specific subchannel is lower than or equal to the predetermined threshold, the base station determines that all the terminals are located in the second cells 23b or 25b of Fig. 2, and allocates the specific subchannel to the terminal having the highest received signal strength at step S305. Here, the base station allocates maximum available power to the specific subchannel for the terminal having the highest received signal strength.

If a terminal has a received signal strength (P_{strength}) greater than the predetermined threshold (P_{threshold}) for the specific subchannel (i.e., N_{G} ≠ 0) at step 304, the base station determines if there is more than one terminal (N_{G}>1) with a received signal strength (P_{strength}) greater than the predetermined threshold (P_{threshold}) at step S306. If the number of terminals (N_{G}) is 1, the base station allocates the specific subchannel to the only terminal having the sufficient received signal strength (P_{strength}) that is greater than the predetermined threshold (P_{threshold}) at step S307. The fact that only one terminal has a received signal strength (P_{strength}) great enough to exceed the threshold indicates that the terminal is located in the cell 23a or 25a and the remaining terminals are located in the cell 23b or 25b.

If the number of terminals (N_{G}) with the required received signal strength is greater than 1, the base station allocates the specific subchannel to the terminals with the highest and second highest received signal strengths at step S308.

At step S308, the base station allocates the specific subchannel with the maximum power to the highest received signal strength terminal, and then allocates the same subchannel to the second highest received signal strength terminal. At the same time, power allocated to the terminal having the highest received signal strength is decreased while power to the terminal having the second highest received signal strength is increased. This procedure is performed until the combined output power of the two terminals is maximized.

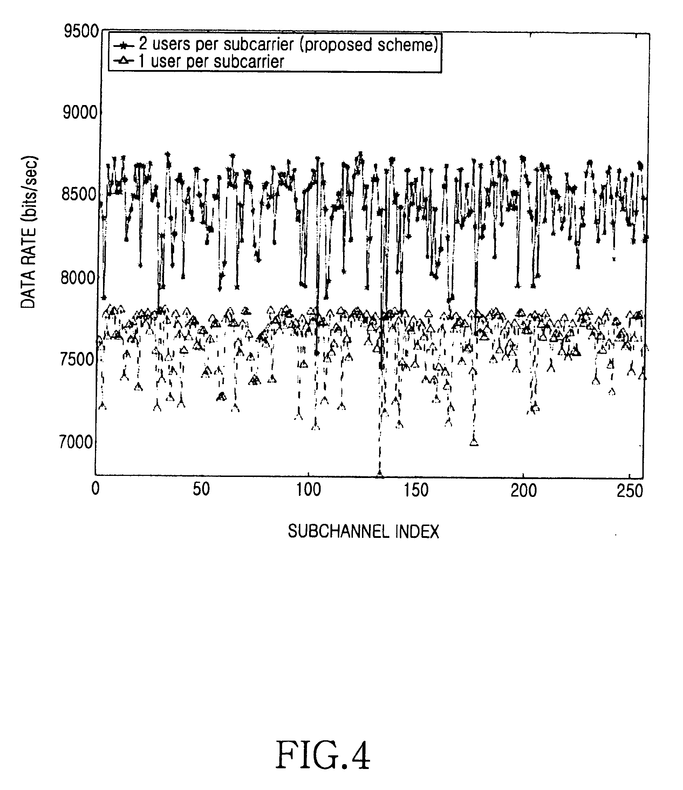

Fig. 4 is a graph illustrating performance simulation results of the resource allocation method according to the present invention.

This simulation is performed 1000 times in an environment with an orthogonal factor θ of 0.2 by allocating 256 subchannels and 30 terminals to each cell in a multi-cell environment. In this simulation, the average throughput per subchannel of the conventional resource allocation technique where one terminal is allocated to one subchannel, and the average throughput per subchannel of the resource allocation technique according to the present invention, where two terminals are allocated to one subchannel using the proposed cell division method, are compared.

It can be seen from Fig. 4 that the throughput per subchannel is increased by allocating two terminals to one subchannel if the orthogonal factor θ has a relatively small value, i.e., if θ = 0.2.

The present invention provides a resource allocation method for downlink transmission in a CDMA system, particularly, an OFDM-CDMA system, which has the following features and advantages. Taking into consideration locations of all terminals in the service area of a base station, channels and power are dynamically allocated to the terminals, thereby enabling efficient resource management.

In addition, in the resource allocation method according to the present invention, the service area of the base station is divided into two virtual cells based on received signal strengths of the terminals for a specific subchannel, and the same subchannel (i.e., the specific subchannel) is allocated to one terminal or at most two terminals according to distribution of the terminals in the virtual cells, thereby significantly increasing system capacity.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A resource allocation method in a communication system supporting multiple access of a plurality of terminals identified using spreading codes, the method comprising:
collecting, from terminals located in a service area of a base station, information of respective received signal strengths of the terminals for channels;
determining whether a terminal having a received signal strength higher than a predetermined threshold for a specific subchannel is present; and
allocating the specific subchannel to at least one terminal as a function of the determination.

2. The method according to claim 1, further comprising allocating the specific subchannel to a terminal having a highest received signal strength among the terminals located in the service area of the base station if there is no terminal having a received signal strength higher than the predetermined threshold for the specific subchannel.

3. The method according to claim 1 or 2, further comprising determining whether the number of terminals having a received signal strength higher than the predetermined threshold for the specific subchannel is greater than 1, if a terminal having a received signal strength higher than the predetermined threshold for the specific subchannel is present.

4. The method according to claim 3, wherein if the number of terminal having a received signal strength higher than the predetermined threshold for the specific subchannel is 1, the specific subchannel is allocated to the terminal having the received signal strength higher than the predetermined threshold for the specific subchannel.

5. The method according to claim 3 or 4, further comprising allocating the specific subchannel to a terminal having a highest received signal strength and a terminal having a second highest received signal strength among the terminals having a received signal strength higher than the predetermined threshold when the number of terminals having a received signal strength higher than the predetermined threshold for the specific subchannel is greater than 1.

6. The method according to one of claims 1 to 5, further comprising:
allocating the specific subchannel to a terminal having a highest received signal strength among the terminals located in the service area of the base station when a terminal having a received signal strength higher than the predetermined threshold for the specific subchannel is not present,
allocating the specific subchannel to the terminal having the received signal strength higher than the predetermined threshold for the specific subchannel when one terminal having a received signal strength higher than the predetermined threshold for the specific subchannel is present, and
allocating the specific subchannel to a terminal having a highest received signal strength and a terminal having a second highest received signal strength among two or more terminals having a received signal strength higher than the predetermined threshold if two or more terminals having a received signal strength higher than the predetermined threshold for the specific subchannel are present.

7. The method according to claim 6, further comprising allocating the specific subchannel with maximum power to the terminal having the highest received signal strength, and the specific subchannel to the terminal having the second highest received signal strength, while gradually decreasing the maximum power allocated to the terminal having the highest received signal strength when two or more terminals having a received signal strength higher than the predetermined threshold for the specific subchannel are present.

8. A resource allocation method in a multicarrier-based mobile communication system including base stations and supporting multiple access of a plurality of terminals identified using codes, the method comprising:
dividing a service area of each base station into at least two virtual cells having different radii about the base station; and
actively allocating resources to terminals located in the service area of the base station according to distribution of the terminals in the virtual cells.

9. The method according to claim 8, wherein the radii of the virtual cells are determined based on received signal strength of the terminals for a specific subchannel.

10. The method according to claim 8 or 9, wherein the radius of a first virtual cell is determined based on maximum transmission power of a specific channel, and the radius of a second virtual cell is previously determined based on a threshold transmission power less than the maximum transmission power.

11. The method according to claim 10, wherein the distribution of the terminals is determined based on received signal strength of the terminals for the specific subchannel, the received signal strength being fed back from the terminals.

12. The method according to claim 11, further comprising allocating the specific subchannel to a terminal having a highest received signal strength among the terminals in the first virtual cell if the terminals are all distributed in the first virtual cell.

13. The method according to claim 11 or 12, further comprising allocating the specific subchannel to a terminal present in the second virtual cell if the terminals are distributed in both the first and second virtual cells.

14. The method according to one of claims 11 to 13, further comprising allocating the specific subchannel to the terminal present in the second virtual cell if the terminals are distributed in both the first and second virtual cells and one terminal is present in the second virtual cell.

15. The method according to one of claims 11 to 14, further comprising allocating the specific subchannel to a terminal having a highest received signal strength and a terminal having a second highest received signal strength of the specific subchannel among the two or more terminals present in the second virtual cell if the terminals are distributed in both the first and second virtual cells and two or more terminals are present in the second virtual cell.

16. The method according to claim 15, further comprising allocating the specific subchannel with maximum power to the terminal having the highest received signal strength, and the specific subchannel is allocated to the terminal having the second highest received signal strength, while gradually decreasing the maximum power allocated to the terminal having the highest received signal strength and gradually increasing power for the terminal having the second highest received signal strength if two or more terminals are present in the second virtual cell.

17. The method according to one of claims 11 to 16, further comprising:
allocating the specific subchannel to a terminal having a highest received signal strength among the terminals in the first virtual cell, if the terminals are all distributed in the first virtual cell,
allocating the specific subchannel to the terminal present in the second virtual cell if the terminals are distributed in both the first and second virtual cells and one terminal is present in the second virtual cell, and
allocating the specific subchannel to a terminal having a highest received signal strength and a terminal having a second highest received signal strength for the specific subchannel among the two or more terminals present in the second virtual cell if the terminals are distributed in both the first and second virtual cells and two or more terminals are present in the second virtual cell.

18. The method according to claim 17, further comprising allocating the specific subchannel with maximum power to the terminal having the highest received signal strength, and the terminal having the second highest received signal strength, while gradually decreasing the maximum power allocated to the terminal having the highest received signal strength and gradually increasing the power for the terminal having the second highest received signal strength if two or more terminals are present in the second virtual cell.

19. A communication system supporting multiple access of a plurality of terminals identified using codes, wherein the communication system is adapted to perform the method of one of claims 1 to 18.
